# EUROPÄISCHE PATENTSCHRIFT

(11) **EP 1 301 977 B1**
(45) Veröffentlichungstag und Bekanntmachung des Hinweises auf die Patenterteilung: **27.10.2004**
(21) Anmeldenummer: 01971755.2
(22) Anmeldetag: 06.07.2001
(51) Int. Cl.: H02K 5/128, H02K 5/15

(54) **ELEKTROMOTOR MIT ROTORBAUGRUPPE UND VERFAHREN ZUR HERSTELLUNG**
ELECTRIC MOTOR WITH ROTOR ASSEMBLY AND METHOD OF MANUFACTURING
MOTEUR ELECTRIQUE AVEC ENSEMBLE ROTOR ET PROCEDE DE REALISATION

(30) Priorität: 14.07.2000 DE 10034302
(43) Veröffentlichungstag der Anmeldung: 16.04.2003
(73) Patentinhaber: Minebea Co., Ltd., Kitasaku-gun, Nagano-ken (JP)
(72) Erfinder: RAPP, Harald, 78664 Eschbronn (DE)
(74) Vertreter: Liesegang, Eva
(86) Internationale Anmeldenummer: PCT/EP2001/007796
(87) Internationale Veröffentlichungsnummer: WO 2002/007290

(56) Entgegenhaltungen:
- GB-A- 2 186 635
- US-A- 3 733 504
- US-A- 4 999 533

## Beschreibung

Die Erfindung betrifft das Gebiet der bürstenlosen Elektromotoren mit Permanentmagneten und insbesondere der Gleichstrommotoren, die als sogenannte Innenläufer-Elektromotoren konfiguriert sind. Innenläufermotoren weisen eine Rotorbaugruppe auf, die eine Rotorwelle und einen oder mehrere auf der Rotorwelle angeordnete Permanentmagnete aufweist und in eine Statoreinheit eingeschoben ist, welche einen Statorkörper und Feldwicklungen aufweist.

Eine Bauweise eines solchen Motors ist in dem US-Patent Nr. 5,970,600 beschrieben. Der Motor weist ein Gehäuse auf, in dem der Stator, die Rotorbaugruppe sowie Lager zur drehbaren Lagerung der Rotorbaugruppe enthalten sind. Der Stator umfaßt Statorbleche und Wicklungen und grenzt einen Innenraum ein, in den die Motorbaugruppe eingeschoben werden kann. Bei der US-A-5,970,600 sind die Lager für die Rotorbaugruppe in Stimkappen des Motorgehäuses integriert, wodurch ein insgesamt kompakter Aufbau erhalten wird.

Ein Problem, das sich bei der Herstellung eines solchen Innenläufer-Elektromotors ergibt, ist, daß beim Einfügen der Rotorbaugruppe in den Statorinnenraum ferromagnetische Partikel von den Rotormagneten abgetragen werden und in den Arbeitsluftspalt gelangen können, der im wesentlichen durch die Außenkontur der Rotormagneten und die Innenkontur des Stators definiert wird. Es ist zwar möglich und üblich, die gesamte Motorbaugruppe nach der Montage durch Vorsehen eines Gehäuses, wie bei der US-A-5 970.600, gegen Eindringen von Fremdkörpern und Verschmutzungen zu schützen, während der Montage der verschiedenen Motorkomponenten ist jedoch das Innere des Motors und insbesondere der Arbeitsluftspalt gegen das Eindringen solcher Fremdkörper nicht geschützt.

Innenläufer-Elektromotoren gemäß dem Stand der Technik haben ferner den Nachteil einer relativ aufwendigen, weil überwiegend sequentiellen Montage, bei der nacheinander der Stator und mindestens ein Lager im Gehäuse vormontiert werden müssen und anschließend die Rotorbaugruppe in den Stator und in das Lager eingepaßt werden muß. In der Regel wird die notwendige Konzentrizität der Teile erst durch einen deckelartigen Flansch hergestellt, in dem sich dann auch das zweite Lager befindet, in dem die Rotorwelle drehbar gelagert ist. Dieser Montageschritt wird durch die, vom Rotormagneten ausgehenden und durch Wechselwirkung mit dem Statorblechpaket radial und axial gerichteten, Magnetkräfte erheblich erschwert, so daß eine berührungslose konzentrische Einpassung des Rotors gar nicht oder nur mit erheblichem vorrichtungstechnischem Aufwand möglich ist.

Aus dem deutschen Patent 32 37 196 ist ein Synchronkleinstmotor bekannt, der ein einteiliges topfartiges Gehäuse aufweist, welches als ferromagnetisch wirksamer Rückschluß die eisenlosen Feldwicklungen umgibt und einen innerhalb der Feldwicklungen angeordneten Rotor aufweist, dessen Permanentmagnete auf einer Hülse aus magnetisch leitfähigem Material angeordnet sind. Der Rotor ist in einem die Lager enthaltenden hermetisch abgeschlossenen Gehäuse untergebracht, und die Drehmomentabgabe erfolgt über eine Dauermagnetkupplung, deren einer Teil durch die Permanentmagnete des Rotors gebildet wird und deren anderer Teil aus einer Permanentmagnetanordnung auf einer Welle außerhalb des Rotorgehäuses besteht. Durch die hermetische Verkapselung des Rotors wird sichergestellt, daß keine Fremdkörper in den Rotor eindringen können, die Lager werden dauergeschmiert und sind gegen Umwelteinflüsse geschützt. Der Zusammenbau des gesamten Motors erfolgt durch Einschieben des hermetisch verkapselten Rotors in den zylindrischen Hohlraum einer einseitig offenen topfförmigen Hülse aus Kunststoff, in die die eisenlosen Feldwicklungen eingebettet sind. Diese Hülse befindet sich in einem ebenfalls topfförmig ausgebildeten Gehäuse aus ferromagnetischem Material.

Die DE-PS 32 37 196 stellt gegenüber dem oben beschriebenen Stand der Technik bereits eine Verbesserung dar, weil der Zusammenbau des Motors vereinfacht ist wobei, wegen der eisenlosen Feldwicklungen, die zudem noch vollständig in Kunststoff eingebettet sind, das Abscheren von ferromagnetischen Partikeln von der Rotorbaugruppe bei der von vornherein ausgeschlossen ist

Die Anordnung der DE-PS 32 37 196 hat den Nachteil, daß Motoren mit eisenlosen Feldwicklungen infolge des grossen Luftspaltes prinzipiell nur mit einem sehr niedrigen Wirkungsgrad arbeiten, weshalb sie überwiegend als Mikromotoren für hohe Drehzahlen, vorzugsweise im Dentalbereich, Verwendung finden. Für die Abgabe größerer Drehmomente, wie beispielsweise für KFZ-Anwendungen gefordert, sind sie jedoch gänzlich ungeeignet.

Der Innenläufermotor der DE-PS 32 37 196 hat weiterhin den Nachteil, daß durch die hermetische Verkapselung der Rotorbaugruppe keine direkte, mechanische Ankopplung einer Last möglich ist, sondern daß die Drehmomentübertragung vom Rotor auf eine Welle nur indirekt, z.B. mittels magnetischer Kopplung erfolgen muß, wie in der Patentschrift beschrieben.

Das U.S. Patent 4,999,533 beschreibt einen Motor mit einer umschlossenen Rotoreinheit, die im Preßsitz in einem Statorkern eingefügt wird. Die GB-A-2,186,635 beschreibt eine Zentrifugalpumpe mit einem Rotor, der in einem zylindrischen Bauteil eingeschlossen ist, wobei das zylindrische Bauteil in einen Statorkern eingefügt wird. Eine ähnliche Anordnung ist aus dem U.S. Patent 3,733,504 bekannt. Diese Schrift offenbart zusätzlich, daß die Hülse der Rotorbaugruppe in dem Stator mittels Zement fixiert werden kann. Zum Ausrichten des zylindrischen Bauteils weist der Statorkern Anschlagkanten auf.

Der Erfindung liegt die Aufgabe zugrunde, eine Rotorbaugruppe für einen Elektromotor sowie einen Innenläufer-Elektromotor vorzusehen, welche mit geringem Aufwand montierbar sind, und bei denen sichergestellt ist, daß während der Montage und beim Betrieb keine Verunreinigungen in das Innere des Motors und insbesondere in den Arbeitsluftspalt gelangen.

Diese Aufgabe wird durch einen Motor mit den Merkmalen von Anspruch 1 gelöst. Die

Erfindung sieht auch ein Verfahren gemäß Anspruch 11 vor. Bevorzugte Ausgestaltungen des Erfindung sind in den abhängigen Ansprüchen definiert.

Die Rotorbaugruppe hat den Vorteil, daß die gesamte Rotorbaugruppe in der Hülse vormontiert werden kann, wobei die Vormontage beispielsweise in einem Reinraum erfolgt, um sicherzustellen, daß keine Verunreinigungen in die Rotorbaugruppe gelangen. Die Rotorbaugruppe ist vorzugsweise so gestaltet, daß die Rotorwelle an einem Ende der Hülse aus der Hülse herausgeführt ist, wobei die Abdichtung zwischen dem Hülsenkörper und der Rotorwelle über Lager in den Stirnenden der Hülse erfolgt, welche die Rotorwelle drehbar lagern. Dadurch ergibt sich zwar keine hermetische Abdichtung der Rotorbaugruppe, jedoch ist die Hülse durch die Lager, die zudem mit Dichtungen gegen Eindringen von Verunreinigungen geschützt sind, in ihren Stirnenden ausreichend abgedichtet, um das Eindringen von Feststoffpartikeln zu verhindern. Während ein Stirnende der Hülse eine Öffnung zum Herausführen der Rotorwelle aufweisen sollte, kann das gegenüberliegende Stirnende nach Bedarf vollständig geschlossen sein.

Durch die Hülse wird das oben beschriebene Problem des Standes der Technik vermieden, daß beim Einfügen der Rotorbaugruppe in den Stator ferromagnetische Partikel von dem/den Permanentmagneten abgetragen werden und in den Luftspalt gelangen. Die den Rotor einschließende Hülse besteht vorzugsweise aus Kunststoff, und der Rotor wird insgesamt als vormontierte Baugruppe ins Innere des Stators eingeschoben, so daß keine Probleme mit dem Abscheren von ferromagnetischen Partikeln entstehen können.

Da der Rotor mittelbar über die Lager mit sehr geringem Konzentritätsfehler in die Kunststoffhülse und diese wiederum nahezu spielfrei in den Stator eingepaßt werden kann, läßt sich eine gegenüber dem Stand der Technik wesentlich verbesserte Konzentrizität zwischen Rotor und Stator erreichen. Darüber hinaus ist von vornherein die metallische Berührung zwischen den Lagern und irgendwelchen Gehäusebauteilen, wie Flansch, Abdeckung und dergleichen, ausgeschlossen, so daß der übertragene Körperschall sehr stark gedämpft und demzufolge auch die Schallemission, gemäß ersten Untersuchungen der Anmelderin, um bis zu 10dB gesenkt werden kann.

Die in die Kunststoffhülse eingeschlossene Rotorbaugruppe hat den weiteren Vorteil, daß sie sich beim Einschieben in den Stator durch die Magnetkräfte zwischen Rotorbaugruppe und Stator in axialer Richtung selbstzentriert, so daß keine weiteren Vorkehrungen getroffen werden müssen, wie das Vorsehen und Justieren von Anschlägen, um den Rotor im Stator richtig zu positionieren. Es muß lediglich darauf geachtet werden, daß die Rotorbaugruppe in dem Stator axial ausreichend frei beweglich ist, damit sie nicht durch einen Anschlag, ein geschlossenes Ende des Stators oder dergleichen daran gehindert wird, sich im Stator magnetisch zu zentrieren.

Die Hülse für die Rotorbaugruppe besteht aus einer Hülsenwand und vorzugsweise einer zusätzlichen Versteifungsstruktur an der Außenseite der Hülsenwand. Dadurch wird sichergestellt, daß die Hülse einerseits ausreichend stabil ist, andererseits auch dann verwendet werden kann, wenn der Arbeitsluftspalt, der durch die Innenkontur des Stators und die Außenkontur des Rotors bestimmt wird, sehr klein ist. Die eigentliche Hülsenwand kann dabei dünner sein, als für die Stabilität der Hülse notwendig, weil die Versteifungsstruktur ihr zusätzliche Festigkeit verleiht. Wenn ein ausreichend großer Luftspalt vorhanden ist, kann die Hülsenwand auch ohne Versteifungsstruktur so dimensioniert werden, daß sie ausreichend stabil ist. Die Versteifungsstruktur wird vorzugsweise in Form von Rippen derart ausgebildet, daß die Außenkontur der Versteifung an der Außenseite der Hülse an die Innenkontur des Stators angepaßt ist. Hierdurch ergibt sich einerseits eine optimale Ausnutzung des Innenraums des Stators und weiterhin der Vorteil, daß die Rotorbaugruppe spielfrei und verdrehfest in den Stator eingefügt werden kann, weil die Außenkontur der Versteifungsstruktur und die Innenkontur des Stators ineinandergreifen.

Die Rippenstruktur weist vorteilhaft in Längsrichtung der Hülse oder diagonal hierzu entlang der Außenseite der Hülse verlaufende Rippen auf, so daß die Rotorbaugruppe geradlinig oder entlang einer Schraubenlinie, durch die Innenkontur des Stators geführt, in den Stator eingeschoben werden kann.

Für eine einfache Montage sind Lager zur Lagerung der Rotorwelle auf dieser vormontiert, so daß der Rotor zusammen mit seinen Lagern in die Hülse eingeschoben werden kann.

Gemäß einer Ausführungsform weist die Hülse einen im wesentlichen zylindrischen Kapselabschnitt und einen Flanschabschnitt auf, die miteinander in Eingriff bringbar sind. D.h. der Kapselabschnitt und der Flanschabschnitt werden von gegenüberliegenden Enden über die Rotorwelle geschoben und bilden zusammen ein geschlossenes Gehäuse um den Rotor.

Die Hülse ist an die Rotorform angepaßt und in der Regel zylindrisch. Sie kann wie beschrieben zweiteilig oder beispielsweise auch dreiteilig mit einem zylindrischen Mittelteil und zwei Endabschnitten ausgebildet sein.

Die Lager zur Lagerung der Welle kommen vorzugsweise in den Stirnenden der Hülse gegen Anschläge zu liegen, so daß die Rotorbaugruppe nach dem Zusammenfügen des Kapsel- und des Flanschabschnittes in der Hülse abgedichtet eingeschlossen ist.

Es ist ferner ein Innenläufer-Elektromotor vorgesehen, mit einer Rotorbaugruppe der beschriebenen Art und einem Stator, wobei die Rotorbaugruppe in den Stator eingeschoben ist und die Hülse eine Wandstärke aufweist, die gleich oder kleiner als ein Arbeitsluftspalt zwischen einem Außendurchmesser des Rotors und einem Innendurchmesser des Stators ist

Vorzugsweise ist die Außenkontur der Versteifungsstruktur an der Außenseite der Hülse an die Innenkontur des Stators angepaßt, wobei die Rippen der Versteifungskontur zwischen den Statorpolen zu liegen kommen.

Alternativ oder zusätzlich können die Statorbleche des Stators mit Innenrillen an den Statorpolen versehen sein, die mit zusätzlichen Versteifungsrippen auf der Außenseite der Hülse in Eingriff bringbar sind.

Vorzugsweise wird die Rotorbaugruppe derart spielfrei in den Stator eingefügt, daß sich der Rotor in dem Statorpaket in axialer Richtung selbst zentriert.

Es ist somit eine Rotorbaugruppe für einen Elektromotor und ein Innenläufer-Elektromotor vorgesehen, bei dem der Rotor zusammen mit den Lagern in einer Hülse vormontiert ist und diese Rotorbaugruppe in den Stator eingeschoben wird. Die Rotorwelle ist aus der Hülse herausgeführt, wobei die Hülsenwand zusammen mit den Lagern und deren Dichtungen eine ausreichende Abdichtung der Rotorbaugruppe gewährleistet. Ferner kann die Hülse aufgrund der Verstärkungsstruktur sehr dünnwandig ausgebildet werden, so daß sich diese Rotorbaugruppe auch für einen sehr kleinen Arbeitsluftspalt zwischen Stator und Rotor eignet. Die Verstärkungsstruktur kann so gestaltet sein, daß sie an die Innenkontur des Stators angepaßt ist und beispielsweise mit den Pollücken des Stators in Eingriff kommt. Durch die erfindungsgemäße Bauweise wird eine sehr kompakte und dabei einfache Rotorbaugruppe geschaffen, die vollständig, beispielsweise in einem Reinraum, vormontiert werden kann und dann insgesamt in den Stator eingeschoben wird. Durch das Vorsehen der Hülse kann verhindert werden, daß beim Einbringen der Rotorbaugruppe in den Stator ferromagnetisches Material abgeschert wird und in den Arbeitsluftspalt dringt. Auch das Eindringen anderer Fremdkörper wird durch die gekapselte Rotorbaugruppe verhindert. Ferner führt die Verkapselung der Rotorbaugruppe mit einer - vorzugsweise aus Kunststoff hergestellten - Hülse dazu, daß sich der Rotor beim Einschieben in den Stator in axialer Richtung selbst zentriert und daß kein Körperschall vom Rotor auf den Stator oder gegebenenfalls ein Motorgehäuse übertragen wird.

Die Erfindung ist im folgenden anhand bevorzugter Ausführungsformen mit Bezug auf die Zeichnungen näher erläutert. In den Figuren zeigen:
- Fig. 1: eine Schnittdarstellung durch eine Rotorbaugruppe gemäß der Erfindung;
- Fig. 2: eine Schnittdarstellung durch den Kapselabschnitt der erfindungsgemäßen Hülse;
- Fig. 3: eine Draufsicht auf den Kapselabschnitt der Fig. 2;
- Fig. 4: eine Schnittdarstellung durch den Flanschabschnitt der erfindungsgemäßen Hülse;
- Fig. 5: eine Unteransicht des Flanschabschnitts der Fig. 4;
- Fig. 6: eine Draufsicht auf ein Statorblech; und
- Fig. 7: eine Schnittdarstellung durch einen Innenläufer-Elektromotor gemäß der Erfindung.

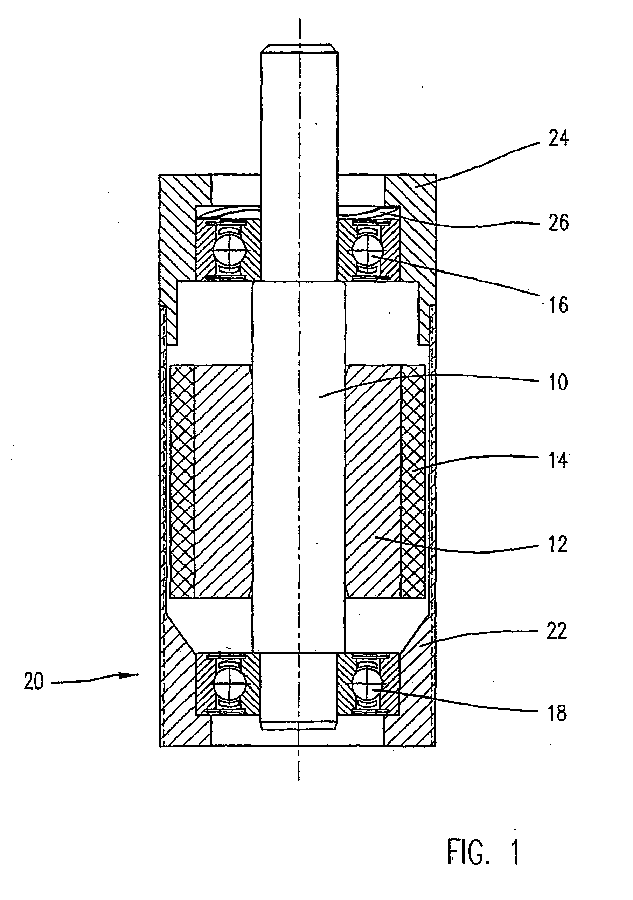

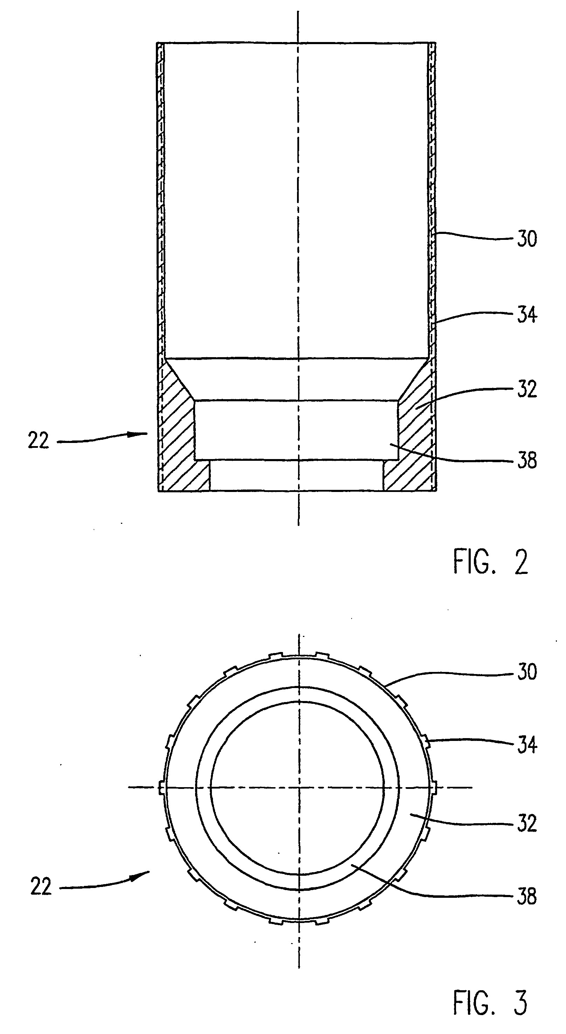

Fig. 1 zeigt eine bevorzugte Ausführungsform einer Rotorbaugruppe in Schnittdarstellung. Die Rotorbaugruppe umfaßt eine Rotorwelle 10, die einen Rückschlußring 12 aus einem weich magnetischen Material, wie Eisen, trägt. Auf dem Rückschlußring 12 ist ein vorzugsweise ringförmiger Permanentmagnet 14 angebracht. Die Welle 10 ist in Lagern 16, 18 drehbar gelagert, wobei die Lager 16, 18 als Wälz- oder Gleitlager und insbesondere als Kugellager ausgebildet sein können. Der Rotor, der hier durch die Rotorwelle 10, den Rückschlußring 12 und den Permanentmagneten 14 gebildet wird, ist in einer Hülse 20 eingeschlossen, die einen Kapselabschnitt 22 und einen Flanschabschnitt 24 umfaßt, die mit Bezug auf die Figuren 2 bis 5 noch näher erläutert sind.

Die Lager 16, 18 können auf der Rotorwelle 10 vormontiert werden und kommen in den Stirnenden der Hülsenabschnitte 22, 24 zu liegen und sind in diese eingepreßt und/oder geklebt oder auf andere geeignete Weise gehalten. Bei der dargestellten Ausführungsform ist in dem Stirnende des Flanschabschnitts 24 angrenzend an das Lager 18 zum Ausgleich der axialen Summentoleranzen ein ringförmiges Federelement, z.B. ein Wellfederring 26 vorgesehen, über den die beiden Lager 16, 18 zusätzlich spielfrei gegeneinander verspannt werden können.

Die Rotorbaugruppe ist in Fig. 1 mit ihren Grundelementen dargestellt, wobei die spezielle Dimensionierung und genaue Anordnung der Elemente variieren kann. Insbesondere sind in Fig. 1 Kugellager 16, 18 vorgesehen, wobei der Rotor auch auf jede andere geeignete Weise drehbar gelagert sein kann, beispielsweise durch Gleitlager, hydraulische Lager, Luftlager etc. Auch kann die Rotorbaugruppe noch andere als die dargestellten Elemente aufweisen. Zwischen dem Außenumfang des Permanentmagneten 14 und der Innenseite der Hülse 20 ist ein möglichst kleiner Luftspalt vorgesehen, der die Relativbewegung zwischen feststehender Hülse und dem drehenden Rotor zuläßt. Je nach Anforderungen an die Rotorbaugruppe und den Elektromotor werden sich dem Fachmann noch viele andere Abwandlungen von der gezeigten Ausführungsform erschließen.

Die Hülse 20 ist vorzugsweise aus Kunststoff durch Spritzgießen oder Extrudieren hergestellt. Ein besonders geeigneter Kunststoff ist LCP (liquid crystal polymer). Andere Materialien sind Polyacetal, Polyoxymethylen (POM), Polysulfon (PSU), Polycarbonat (PC), Polyphenylensulfid (PPS), Polyamidimid (PAi), Polyetheretherketon (PEEK), Polyethersulfon (PES), Polyetherimid (PEi).

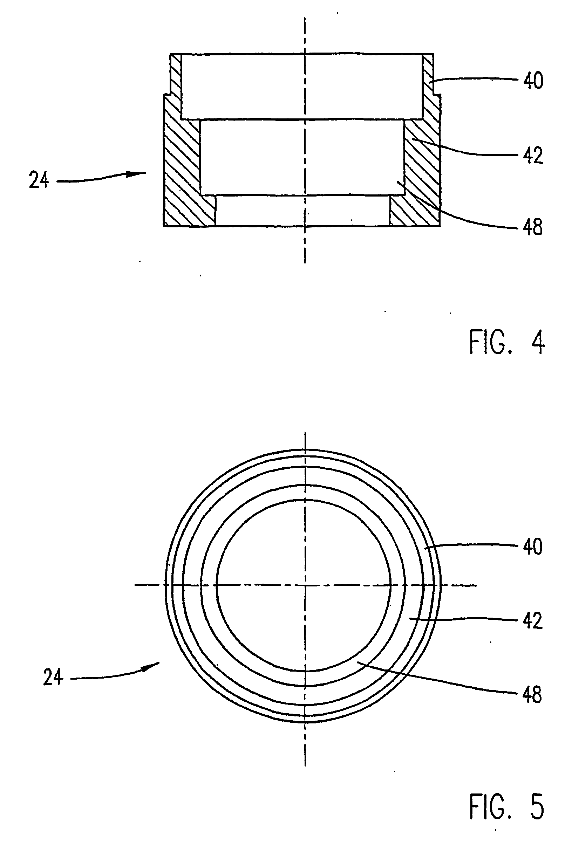

Bei der gezeigten Ausführungsform besteht die Hülse 20 aus einem becherartigen Kapselabschnitt 22, der in den Fig. 2 und 3 näher dargestellt ist, und einem deckelähnlichen Flanschabschnitt 24, der in den Fig. 4 und 5 näher dargestellt ist. Dies ist lediglich eine Ausführungsform der Erfindung, wobei die Hülse 20 beispielsweise auch aus zwei im wesentlichen ähnlichen, ineinandergreifenden Becherabschnitten oder aus drei Teilen bestehen oder auf jede andere geeignete Weise ausgebildet sein kann.

Der in den Fig. 2 und 3 im einzelnen dargestellte Kapselabschnitt 22 besteht aus einer Stirnwand 32 und einem daran anschliessenden Hülsenteil 30 mit einer relativ dünnen Innenwand. Auf der Außenseite des Hülsenteils 30 sind Längsrippen 34 ausgebildet, wobei bei der gezeigten Ausführungsform 18 Längsrippen 34 vorgesehen sind. Selbstverständlich ist die Erfindung auf keine bestimmte Rippenanzahl beschränkt, solange eine ausreichende Anzahl von Rippen vorgesehen ist, um der Hülse 20 die notwendige Steifigkeit zu verleihen.

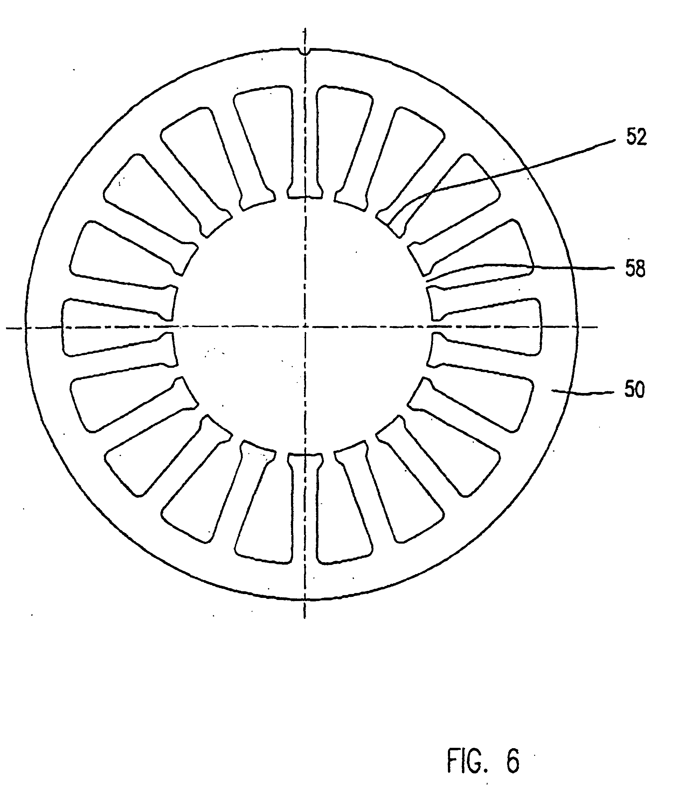

Bei der gezeigten Ausführungsform erstrecken sich die Längsrippen 34 im wesentlichen über die gesamte Länge der zylindrischen Hülse 20 und sind parallel zu deren Längsachse ausgerichtet. Bei anderen Ausführungsformen könnten die Rippen beispielsweise diagonal verlaufen, wobei die Anzahl und Ausgestaltung der Rippen an die Innenkontur des Stators angepaßt wird, wie mit Bezug auf Fig. 6 deutlich wird.

Fig.6 zeigt ein einzelnes Statorblech 50 mit Statorpolen 52 und Pollücken 58. Bei der gezeigten Ausführungsform sind die Längsrippen 34 auf der Außenseite des Kapselabschnittes 22 der Hülse 30 so ausgebildet und angeordnet, daß diese Längsrippen 34 mit den Aussparungen der Pollücken 58 in Eingriff kommen, wenn die Rotorbaugruppe in den Stator eingebracht wird.

Bei einer anderen Ausführungsform können Rippen zusätzlich oder alternativ so ausgebildet und angeordnet sein, daß sie mit Rillen (nicht gezeigt) in Eingriff kommen, die auf den radial nach innen gerichteten Stirnflächen der Statorpole angeordnet sind.

Für die Erfindung ist nicht entscheidend, daß die Anzahl der Rippen mit der Anzahl der Pollücken übereinstimmt, vielmehr können sie in einem beliebigen Verhältnis zueinander stehen.

Wenn die Rippen, wie bei der gezeigten Ausführungsform, als Längsrippen 34 ausgebildet sind, die parallel zur Längsachse der Hülse 20 verlaufen, kann die gesamte Rotorbaugruppe geradlinig in den Stator eingefügt werden. Wenn sie beispielsweise diagonal auf der Hülse angeordnet sind, müßte die Rotorbaugruppe in einen entsprechenden Stator mit geschrägten Pollücken quasi "eingeschraubt" werden, wobei der Stator dann aus - um einen bestimmten Winkel gegeneinander verdrehten - Statorblechen aufgebaut wird. Wieder mit Bezug auf die Fig. 2 bis 5 ist der Flanschabschnitt 24 der Hülse 20 mit einer relativ kurzen Seitenwand 40 und einer Stirnwand 42 so ausgebildet, daß er in den Kapselabschnitt 22 geschoben werden kann. Vorzugsweise werden die Hülsenabschnitte 22, 24 mittels Kleben, Schweißen oder auf andere geeignete Weise verbunden werden.

In den beiden Stirnwänden 32, 42 der Hülsenabschnitte 22, 24 ist jeweils ein Sitz 38 bzw. 48 ausgebildet, in den die Kugellager 18, 16 oder andere geeignete Lager zur Lagerung der Welle 10 eingepaßt werden können.

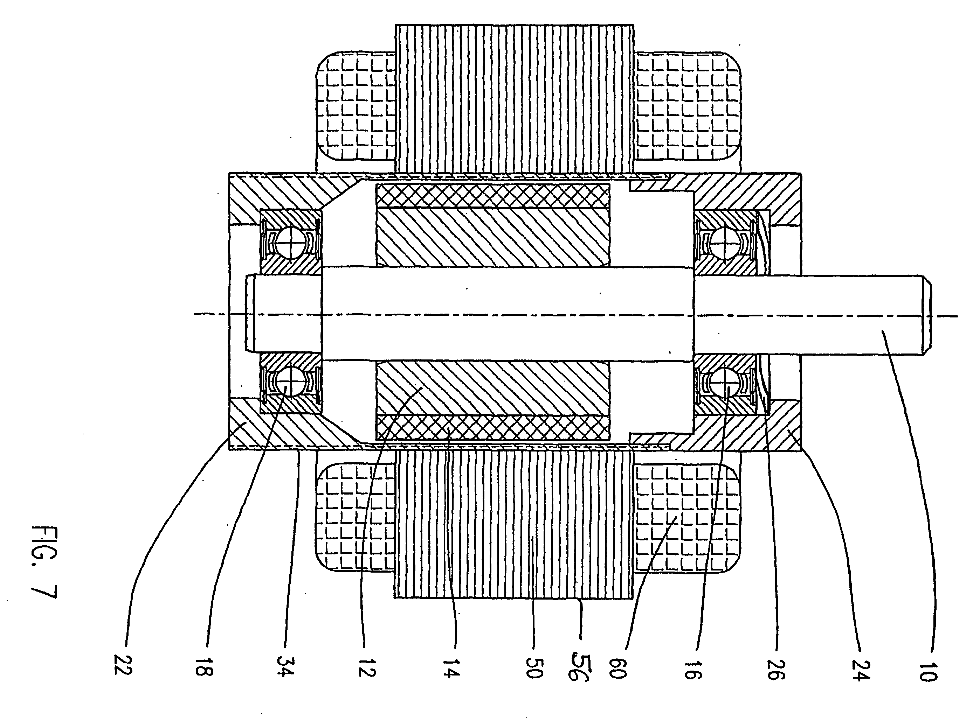

Eine Ausführungsform eines Innenläufer-Elektromotors gemäß einer bevorzugten Ausführungsform ist schematisch in Fig. 7 dargestellt. Die gleichen oder ähnlichen Elemente wie in den Fig. 1 bis 6 sind mit denselben Bezugszeichen bezeichnet und hier nicht nochmals erläutert.

Fig. 7 zeigt die mit Bezug auf Fig. 1 erläuterte Rotorbaugruppe gemäß der Erfindung, die in das Innere eines Stators 56 eingeschoben ist. Der Stator 56 ist in Fig. 7 schematisch durch ein aus einzelnen Statorblechen 50 aufgebautes Blechpaket und eine Wicklung 60 dargestellt. Eine gestrichelte Linie 42 deutet den Eingriff der Längsrippen 34 in die zwischen den Statorpolen 52 ausgebildeten Pollücken 58 an.

Der Innenläufer-Elektromotor kann auf einfache Weise hergestellt werden, indem zunächst die Rotorbaugruppe, vorzugsweise in einem Reinraum, vormontiert wird. Hierzu werden der Eisenrückschlußring 12 und der Permanentmagnet 14 auf die Rotorwelle 16 aufgebracht und die Lager 16, 18 auf der Rotorwelle 10 vormontiert. Die beiden Hülsenabschnitte 22, 24 werden von gegenüberliegenden Enden der Welle 10 über den Rotor geschoben und miteinander verbunden und vorzugsweise zusätzlich verklebt. Die Rotorlager 16, 18 sitzen dann fest in den Stimenden 32, 42 der Hülsenabschnitte 22, 24 und werden durch den Wellfederring 26 verspannt Bevor die vollständig vormontierte Baugruppe in das Innere des Stators 56 - in dem sie axial frei beweglich ist - eingeschoben und durch "selbstzentrierende Magnetkräfte" in die magnetische Mitte ausgerichtet wird, kann zur dauerhaften Verbindung mit dem Stator auf der Außenseite der Hülse ein vorzugsweise flüssiger Kunststoff aufgebracht werden.

Bei der gezeigten Ausführungsform ist der Statorring an seinen beiden Enden offen, so daß die axiale Bewegung der Rotorbaugruppe nicht behindert wird. Andere Bauformen des Stators sind für den Fachmann erkennbar, wobei die Erfindung den großen Vorteil bietet, daß auf Anschläge oder andere Mittel zum Zentrieren des Rotors im Stator verzichtet werden kann.

Nach dem Einschieben der Rotorbaugruppe in den Stator füllt der Klebstoff die noch vorhandenen Zwischenräume zumindest teilweise und gewährleistet nach dem Aushärten einen festen, unverschieblichen Sitz des Rotors im Stator.

Durch die vollständige Verkapselung des Rotors und das Einschließen aller beweglichen, rotierenden Teile in einer (relativ zu dem Stator und gegebenenfalls einem Motorgehäuse) feststehenden Hülse wird die Übertragung von Körperschall und dadurch die Schallemission des gesamten Motors, wie eingangs erwähnt, drastisch reduziert.

Der dergestalt aufgebaute Innenläufermotor kann jetzt - ohne daß die Funktion in irgendeiner Weise beeinträchtigt wird - umspritzt oder vergossen bzw. in ein umhüllendes Gehäuse eingebracht werden oder auch mit einem stirnseitig angeordneten Befestigungsflansch versehen werden.

Eine besondere Anpassung des Stators 56 an die Rotorbaugruppe ist nicht notwendig. Die Verbindungen zwischen den einzelnen Komponenten, wie Welle 10, Rückschlußring 12 und Permanentmagnet 14 oder Kapselabschnitte 22, 24 und Lager 16, 18 können durch Verpressen, Kleben, Schweißen, Rasten oder andere geeignete Weise erfolgen. Die Hülse 20 und der Stator 26 können nach dem Zusammenfügen verklebt werden. Um ein Abscheren von Kunststoffmaterial der Hülse 20 beim

Einschieben des Rotors in die Hülse zu vermeiden, können die Kanten der Permanentmagnete 14 abgerundet oder angefast sein. Zahlreiche weitere Abwandlungen und Modifikationen der Erfindung sind im Rahmen der Ansprüche möglich.

Die Wandstärke des Hülsenteils 30 wird so gewählt, daß sie den Luftspalt zwischen den Permanentmagneten 14 des Rotors und der Innenseite des Stators 56 im wesentlichen füllt, wobei die Innenwand des Hülsenteils 30 aufgrund der Rippenversteifung auch dünner als dieser Luftspalt sein kann bzw. die erfindungsgemäße verkapselte Rotorbaugruppe auch bei sehr geringem Arbeitsluftspalt verwendbar ist. Die Rippen 34 werden, wie erläutert, so ausgebildet, daß sie an die Innenkontur des Stators angepaßt sind und mit dieser in Eingriff kommen und daß sie der gesamten Hülse zusätzliche Steifigkeit verleihen.

Zusätzlich zu der gezeigten Ausführungsform kann vorgesehen sein, auch den Stator 56 zu verkapseln und diesen beispielsweise in Kunststoff zu vergießen.

### Bezugszeichenliste

- 10: Rotorwelle
- 12: Rückschlußring
- 14: Permanentmagnet
- 16: Kugellager
- 18: Kugellager
- 20: Hülse (zylindrisch)
- 22: Kapselabschnitt
- 24: Flanschabschnitt
- 26: Wellfederring
- 30: Hülsenteil
- 32: Stirnwand
- 34: Längsrippen
- 38: Sitz
- 40: Seitenwand
- 42: Stirnwand
- 48: Sitz
- 50: Statorblech
- 52: Statorpol
- 56: Stator
- 58: Pollücken
- 60: Wicklung

## Patentansprüche

1. Elektromotor mit einer Rotorbaugruppe, mit einer Rotorwelle (10) und wenigstens einem Permanentmagneten (14), der auf der Rotorwelle angeordnet ist, wobei die Rotorwelle (10) mit dem Permanentmagneten (14) darauf in einer Hülse (20) untergebracht ist und die Rotorwelle (10) in der Hülse (20) frei drehbar ist, und mit einem Stator (56), wobei das Außenmaß der Rotorbaugruppe und das Innenmaß des Stators so gewählt sind, daß die Rotorbaugruppe während des Einschiebens in dem Stator axial frei beweglich ist, wobei die Rotorbaugruppe in dem Stator (56) durch selbstzentrierende Magnetkräfte in der magnetischen Mitte des Stators (56) ausgerichtet ist.

2. Elektromotor nach Anspruch 1, **dadurch gekennzeichnet, daß** die Hülse (20) eine Versteifungsstruktur (34) an ihrer Außenseite aufweist.

3. Elektromotor nach Anspruch 1 oder 2, **dadurch gekennzeichnet, daß** die Hülse (20) an ihrer Außenseite eine Rippenstruktur (34) aufweist, wobei die Rippenstruktur in Längsrichtung der Hülse (20) oder diagonal hierzu entlang der Außenseite der Hülse (20) verlaufende Rippen (34) aufweist.

4. Elektromotor nach einem der vorangehenden Ansprüche, **dadurch gekennzeichnet, daß** Lager (16, 18) zur Lagerung der Rotorwelle (10) in die Hülse (20) integriert sind.

5. Elektromotor nach einem der vorangehenden Ansprüche, **dadurch gekennzeichnet, daß** die Rotorwelle (10) an einem Ende der Hülse (20) aus der Hülse herausgeführt ist und das andere Ende der Hülse geschlossen oder weitgehend geschlossen ist.

6. Elektromotor nach einem der vorangehenden Ansprüche, **dadurch gekennzeichnet, daß** die Hülse (20) zweiteilig ist.

7. Elektromotor nach Anspruch 6, **dadurch gekennzeichnet, daß** die Hülse (20) einen im wesentlichen zylindrischen Kapselabschnitt (22) und einen Flanschabschnitt (24) aufweist, die miteinander in Eingriff bringbar sind.

8. Elektromotor nach einem der vorangehenden Ansprüche, **dadurch gekennzeichnet, daß** Lager (16, 18) zur Lagerung der Welle (10) in den Stirnenden der Hülse (20) angeordnet sind und die Rotorbaugruppe in der Hülse (20) abgedichtet einschließen.

9. Elektromotor nach Anspruch 2 und einem der vorangehenden Ansprüche, **dadurch gekennzeichnet, daß** die Außenkontur der Versteifungsstruktur (34) an der Außenseite der Hülse (20) an die Innenkontur des Stators (56) angepaßt ist.

10. Elektromotor nach einem der vorangehenden Ansprüche, **dadurch gekennzeichnet, daß** die Rotorbaugruppe spielfrei in den Stator (56) eingefügt ist.

11. Verfahren zum Herstellen eines Elektromotors nach einem der vorangehenden Ansprüche, **gekennzeichnet durch** folgende Verfahrensschritte:
Bereitstellen einer Rotorbaugruppe mit einer Rotorwelle (10) und wenigstens einem Permanentmagneten (14), wobei der Permanentmagnet (14) auf der Rotorwelle (10) angeordnet wird;
Einbringen der Rotorwelle (10) mit dem Permanentmagneten (14) darauf in eine Hülse (20), wobei die Rotorwelle (10) in der Hülse (20) frei drehbar ist;
Bereitstellen eines Stators;
Einschieben der Rotorbaugruppe in den Stator (58), wobei die Rotorbaugruppe während des Einschiebens axial frei beweglich ist und **durch** selbstzentrierende Magnetkräfte in der magnetischen Mitte des Stators (56) ausgerichtet wird.

12. Verfahren nach Anspruch 11, **dadurch gekennzeichnet, daß** die Hülse (20) eine Versteifungsstruktur (34) an ihrer Außenseite aufweist und die Versteifungsstruktur (34) während des Einschiebens durch die Innenkontur des Stators (56) geführt wird.

13. Verfahren nach Anspruch 11 oder 12, **dadurch gekennzeichnet, daß** vor dem Einschieben der Rotorbaugruppe in den Stator (56) ein fließfähiger Klebstoff auf die Außenseite der Rotorbaugruppe und/oder die Innenseite des Stators (56) aufgebracht wird, der das Einschieben der Rotorbaugruppe nicht behindert und nach dem Einschieben aushärtet.

## Claims

1. An electric motor comprising
a rotor assembly having a rotor shaft (10) and at least one permanent magnet (14) arranged on the rotor shaft, the rotor shaft (10) having the permanent magnet (14) arranged thereon being housed in a sleeve (20) and the rotor shaft (10) being free to rotate within the sleeve (20); and
a stator (56), the external dimension of the rotor assembly and the internal dimension of the stator being selected such that the rotor assembly is free to move in the axial direction while the rotor assembly is inserted into the stator, the rotor assembly being aligned within the stator (56) in the magnetic centre of the stator (56) by self-centring magnetic forces.

2. The electric motor of claim 1, in which the sleeve (20) comprises a stiffening structure (34) on the outside of the sleeve (20).

3. The electric motor of claim 1 or 2, in which the sleeve (20) comprises a rib structure (34) on the outside of the sleeve (20), wherein the rib structure comprises ribs (34) extending in the longitudinal direction of the sleeve (20) or diagonally thereto along the outside of the sleeve (20).

4. The electric motor of any one of the preceding claims, in which bearings (16, 18) for supporting the rotor shaft (10) are integrated into the sleeve (20).

5. The electric motor of any one of the preceding claims, in which the rotor shaft (10) is lead out of the sleeve (20) at one end of the sleeve, and the other end of the sleeve is closed or is substantially closed.

6. The electric motor of any one of the preceding claims, in which the sleeve (20) has a two-piece construction.

7. The electric motor of claim 6, in which the sleeve (20) comprises a substantially cylindrical encapsulation section (22) and a flange section (24) which can be engaged with each other.

8. The electric motor of one of the preceding claims, in which bearings (16, 18) for supporting the shaft (10) are arranged in the end faces of the sleeve (20) and enclose the rotor assembly in the sleeve (20) in a sealed manner.

9. The electric motor of claim 2 and any one of the preceding claims, in which the outer contour of the stiffening structure (34) on the outside of the sleeve (20) is adapted to the inner contour of the stator (56).

10. The electric motor of any one of the preceding claims, in which the rotor assembly is inserted into the stator (56) free from backlash.

11. A method for manufacturing an electric motor according to one of the preceding claims comprising the following steps:
providing a rotor assembly having a rotor shaft (10) and at least one permanent magnet (14), the permanent magnet (14) being arranged on the rotor shaft (10);
inserting the rotor shaft (10) having the permanent magnet (14) arranged thereon into a sleeve (20), the rotor shaft (10) being free to rotate within the sleeve (20);
providing a stator;
inserting the rotor assembly into the stator (56), the rotor assembly being free to move in the axial direction when it is inserted into the stator and being aligned in the magnetic centre of the stator (56) by self-centring magnetic forces.

12. The method of claim 11, in which the sleeve (20) comprises a stiffening structure (34) on the outside thereof and the stiffening structure (34) is guided through the inner contour of the stator (56) when the rotor assembly is inserted.

13. The method of claim 11 or 12, in which before the rotor assembly is inserted into the stator (56) a flowable adhesive is applied to the outside of the rotor assembly and/or the inside of the stator (56) which does not constrain the insertion of the rotor assembly and which cures after the rotor assembly has been inserted.

## Revendications

1. Moteur électrique avec un ensemble de rotor, avec un arbre de rotor (10) et au moins un aimant permanent (14) disposé sur l'arbre du rotor, moyennant quoi l'arbre du rotor (10) comportant l'aimant permanent (14) est disposé dans un manchon (20) et l'arbre du rotor (10) tourne librement dans le manchon (20), et avec un stator (56), moyennant quoi les dimensions extérieures de l'ensemble de rotor et les dimensions intérieures du stator sont choisies de telle sorte que l'ensemble du rotor soit librement mobile axialement pendant le coulissement dans le stator, moyennant quoi l'ensemble du rotor est orienté dans le stator (56) à l'aide de forces magnétiques d'auto-centrage au niveau du centre magnétique du stator (56).

2. Moteur électrique selon la revendication 1, **caractérisé en ce que** le manchon (20) comprend, du côté extérieur, une structure de renforcement (34).

3. Moteur électrique selon la revendication 1 ou 2, **caractérisé en ce que** le manchon (20) comprend, du côté extérieur, une structure nervurée (34), moyennant quoi le structure nervurée comprend des nervures (34) qui s'étendent dans la direction longitudinale du manchon (20) ou en diagonale le long du côté extérieur du manchon (20).

4. Moteur électrique selon l'une des revendications précédentes, **caractérisé en ce que** des paliers (16, 18) sont intégrés pour le logement de l'arbre du rotor (10) dans le manchon (20).

5. Moteur électrique selon l'une des revendications précédentes, **caractérisé en ce que** l'arbre du rotor (10) est guidé hors du manchon au niveau d'une de ses extrémités et l'autre extrémité est obturée ou presque obturée.

6. Moteur électrique selon l'une des revendications précédentes, **caractérisé en ce que** le manchon (20) est en deux parties.

7. Moteur électrique selon la revendication 6, **caractérisé en ce que** le manchon (20) comprend une partie de capsule (22) globalement cylindrique et une partie de bride (24) qui peuvent s'emboîter l'une dans l'autre.

8. Moteur électrique selon l'une des revendications précédentes, **caractérisé en ce que** des paliers (16, 18) pour le logement de l'arbre (10) sont disposés au niveau des extrémités frontales du manchon (20) et entourent l'ensemble du rotor dans le manchon (20) de manière étanche.

9. Moteur électrique selon la revendication 2 et une des revendications précédentes, **caractérisé en ce que** le contour extérieur de la structure de renforcement (34) du côté extérieur du manchon (20) est adaptée au contour interne du stator (56).

10. Moteur électrique selon l'une des revendications précédentes, **caractérisé en ce que** l'ensemble du rotor est inséré sans jeu dans le stator (56).

11. Procédé de fabrication d'un moteur électrique selon l'une des revendications précédentes, **caractérisé par** les étapes suivantes :
réalisation d'un ensemble de rotor avec un arbre de rotor (10) et au moins un aimant permanent (14), moyennant quoi l'aimant permanent (14) est disposé sur l'arbre du rotor (14) ;
insertion de l'arbre du rotor (10) avec l'aimant permanent (14) dans un manchon (20), moyennant quoi l'arbre du rotor (10) tourne librement dans le manchon (20) ;
réalisation d'un stator ;
coulissement de l'ensemble du rotor dans le stator (56), moyennant quoi l'ensemble du rotor est librement mobile axialement pendant le coulissement et est orienté par des forces magnétiques d'auto-centrage au niveau du centre magnétique du stator (56).

12. Procédé selon la revendication 11, **caractérisé en ce que** le manchon (20) comprend une structure de renforcement (34) sur son côté extérieur et la structure de renforcement (34) est guidée par le contour interne du stator (56) pendant le coulissement.

13. Procédé selon la revendication 11 ou 12, **caractérisé en ce que**, avant le coulissement de l'ensemble du rotor dans le stator (56), un adhésif fluide est appliqué sur le côté extérieur de l'ensemble du rotor et/ou sur le côté intérieur du stator (56), qui n'empêche pas le coulissement et qui durcit après celui-ci.
